# EUROPEAN PATENT SPECIFICATION

(11) **EP 3 521 005 B1**
(45) Date of publication and mention of the grant of the patent: **09.12.2020**
(21) Application number: 18212546.8
(22) Date of filing: 14.12.2018
(51) Int. Cl.: B29D 23/00

(54) **RESIN PIPE MEMBER**
HARZROHRELEMENT
ÉLÉMENT DE TUYAU EN RÉSINE

(30) Priority: 31.01.2018 JP 2018015659
(43) Date of publication of application: 07.08.2019
(73) Proprietor: Toyota Boshoku Kabushiki Kaisha, Kariya-shi, Aichi 448-8651 (JP)
(72) Inventor: OHASHI, Junichi, Kariya-shi, Aichi 448-8651 (JP); SAITO, Yasuhiro, Kariya-shi, Aichi 448-8651 (JP)
(74) Representative: TBK

(56) References cited:
- CN-U- 203 571 309
- FR-A1- 2 853 362
- JP-A- 2001 205 707

## Description

### BACKGROUND OF THE INVENTION

### (1) Field of the Invention

The present invention relates to a resin pipe member according to the preamble of claim 1, and more particularly to a resin pipe member in which a flange for fastening to a different member is formed integrally with a shaft end portion of a pipe main body.

Document FR 2 853 362 A1 is considered closest prior art and discloses the features of the preamble of claim 1.

Other generic resin pipe members are disclosed in JP 2001 205 707 A and in CN 203 571 309 U.

As a conventional resin pipe member, there is generally known a structure including a pipe main body and a flange formed integrally with a shaft end portion of the pipe main body to be fastened to a different member by a fastening member (see, for example, JP H11-6273 9 A and JP 2015-105591 A). This type of resin pipe member is used, for example, to supply gas generated in an engine to an intake manifold.

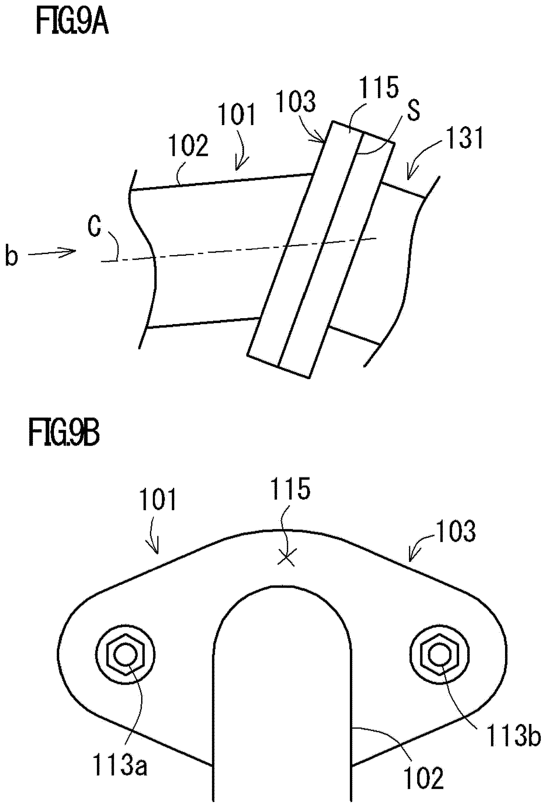

The resin pipe member 101 for gas supply described above may be required, in some cases, to have a configuration in which a fastening surface S of a flange 103 is not orthogonal to an axis C of a shaft end portion of a pipe main body 102, for example, as shown in FIG. 9A, due to restrictions on mounting requirements. However, in this case, for example, as shown in FIG. 9B, the creep deformation at a site 115 away from fastening places 113a, 113b in the flange 103 increases. Therefore, it becomes difficult to maintain stable gas supply to an intake manifold 131 for a long period of time. Further, the mold structure for molding the resin pipe member has a complicated structure using a plurality of slide molds. Incidentally, these problems occur similarly even for resin pipe members used for applications other than gas supply.

JP HI 1-62739 A presented above discloses that a groove for absorbing the fastening load is provided in a surface opposite to the fastening surface of the flange to be fastened to the different member. Also, JP 2015-105591 A discloses that a pipe main body is obliquely formed in an oil strainer made of a resin, due to restrictions on mounting requirements. However, JP HI 1-62739 A and JP 2015-105591 A nowhere disclose a configuration in which the fastening surface of the flange is not orthogonal to the axis of the shaft end portion of the pipe main body.

An embodiment of the present invention has been made in view of the above-described circumstances, and an object of the present invention is to provide a resin pipe member which can reduce the creep deformation generated at a site apart from fastening places of a flange in a configuration in which a fastening surface of the flange is not orthogonal to an axis of a shaft end portion of a pipe main body, and which can be molded using a simple mold structure.

One aspect of the present embodiments provides a resin pipe member including: a pipe main body; and a flange formed integrally with a shaft end portion of the pipe main body to be fastened to a different member by a fastening member, wherein the flange is arranged so that its fastening surface intersects an axis of the shaft end portion of the pipe main body at an acute angle or an obtuse angle, wherein the flange is formed with a fastening surface portion forming the fastening surface, a first rib facing a surface opposite to the fastening surface of the fastening surface portion, and a plurality of second ribs causing the fastening surface portion and the first rib to communicate with each other, and wherein the first rib is provided along a plane orthogonal to the axis of the shaft end portion of the pipe main body.

In a further aspect, the second ribs may be provided so as to be orthogonal to the first rib and cross the first rib.

In a further aspect, the resin pipe member may be fastened to an intake manifold which is the different member in order to supply gas generated in an engine to the intake manifold.

In a further aspect, the flange may be provided with right and left fastening portions to be fastened to the different member by the fastening member with the pipe main body sandwiched therebetween, and wherein the fastening surface portion may be provided at a portion connecting the right and left fastening portions in the flange.

In a further aspect, the first rib and the second rib may be formed in a plate-shape respective.

According to the resin pipe member of the present embodiment, the flange is arranged so that its fastening surface intersects the axis of the shaft end portion of the pipe main body at an acute or obtuse angle. The flange is formed with a fastening surface portion forming the fastening surface, a first rib facing a surface opposite to the fastening surface of the fastening surface portion, and a plurality of second ribs causing the fastening surface portion and the first rib to communicate with each other, and the first rib is provided along a plane orthogonal to the axis of the shaft end portion of the pipe main body. As a result, the rigidity of the flange is enhanced by the first rib and the second ribs. Therefore, in the configuration in which the fastening surface of the flange is not orthogonal to the axis of the shaft end portion of the pipe main body, the creep deformation generated at a site away from the fastening places of the flange can be reduced. Further, as compared with a resin pipe member in which the first rib is arranged in parallel with the fastening surface portion, the slide molds used in the mold structure can be reduced or eliminated. Therefore, it is possible to mold the resin pipe member using a simple mold structure.

Further, when the second ribs are provided so as to be orthogonal to the first rib and cross the first rib, the rigidity of the flange is further increased, so that the creep deformation generated at a site away from the fastening places of the flange can be further reduced.

Further, when the resin pipe member is used for supplying gas generated in an engine to an intake manifold which is the different member, stable gas supply to the intake manifold can be maintained for a long period.

Further, when the flange is provided with right and left fastening portions with the pipe main body sandwiched therebetween, and the fastening surface portion is provided at a portion connecting the left and right fastening portions in the flange, the rigidity of the flange is further increased.

Furthermore, when the first rib and the second rib are formed in a plate-shape respective, the rigidity of the flange is further increased.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
FIG. 1 is a perspective view of a resin pipe member according to an Example;
FIG. 2 is a perspective view of a shaft end portion of the resin pipe member;
FIG. 3 is a cross-sectional view taken along line III-III of FIG. 1;
FIG. 4 is a perspective view of an intake manifold to which the resin pipe member is fastened;
FIG. 5 is a perspective view of a shaft end portion of a resin pipe member according to a Comparative Example;
FIG. 6 is a longitudinal sectional view of the resin pipe member;
FIG. 7 is a graph showing the results of a creep test of the resin pipe members according to an Experimental Example and the Comparative Example;
FIGS. 8A and 8B are explanatory views for explaining mold structures for molding the resin pipe members, in which FIG. 8A shows a mold structure for the resin pipe member according to the Example and FIG. 8B shows a mold structure for the resin pipe member according to the Comparative Example; and
FIGS. 9A and 9B are explanatory views for explaining a conventional resin pipe member, in which FIG. 9A is a side view of a shaft end portion of the resin pipe member and FIG. 9B is a view taken along arrow b in FIG. 9A.

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

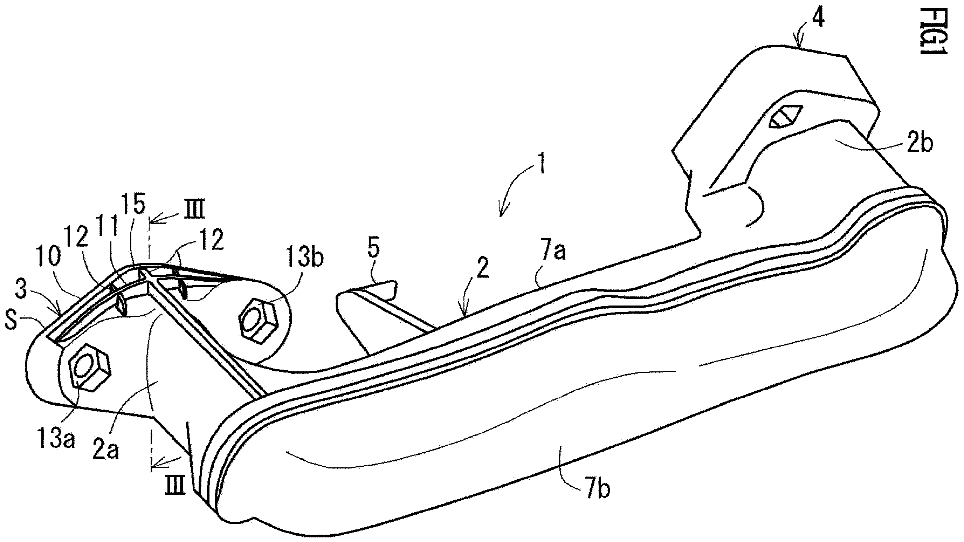

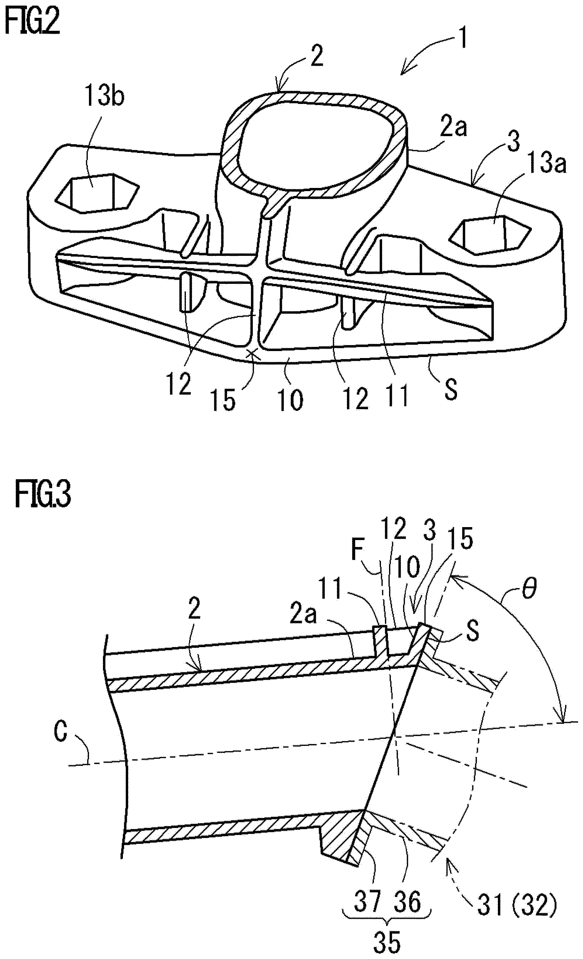

The resin pipe member according to the present embodiment is a resin pipe member (1) including: a pipe main body (2) and a flange (3) formed integrally with a shaft end portion (2a) of the pipe main body (2) to be fastened to a different member (31) by fastening members (8, 9), in which the flange (3) is arranged so that its fastening surface (S) intersects an axis (C) of the shaft end portion of the pipe main body (2) at an acute or obtuse angle (see, for example, FIGS. 1 to 4). The flange (3) is formed with a fastening surface portion (10) forming the fastening surface (S), a first rib (11) facing a surface opposite to the fastening surface of the fastening surface portion, and a plurality of second ribs (12) causing the fastening surface portion and the first rib to communicate with each other. The first rib (11) is provided along a plane (F) orthogonal to the axis (C) of the shaft end portion of the pipe main body (2) (for example, see FIGS. 2 and 3).

The application, shape, size, and the like of the resin pipe member are not particularly limited. Also, the flange (3) is usually arranged so that its fastening surface (S) is inclined with respect to the plane orthogonal to the axis (C) of the shaft end portion of the pipe main body (2). Here, for example, when an imaginary plane (F) orthogonal to the axis (C) of the shaft end portion of the pipe main body (2) and passing through the center of the flange (3) is set, the fastening surface portion (10) can be provided at a portion in the flange (3), closer to the shaft end portion of the pipe main body (2) than the virtual plane (F).

As the resin pipe member according to the present embodiment, for example, there is exemplified an aspect in which the second ribs (12) are provided so as to be orthogonal to the first rib (11) and cross the first rib (for example, see FIG. 2).

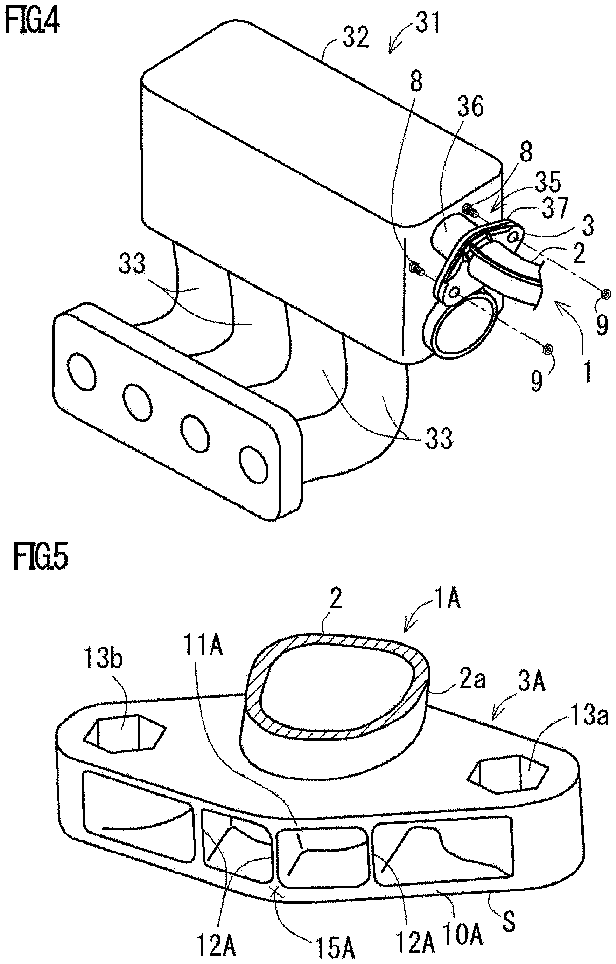

As the resin pipe member according to the present embodiment, for example, there is exemplified an aspect in which the resin pipe member (1) is used to supply gas generated in an engine to an intake manifold (31) which is the different member (for example, see FIG. 4).

Note that reference numerals in parentheses attached to the respective components described in the above embodiment indicate correspondence relationships with specific components described in the Example which will be described later.

Hereinafter, the present invention will be described in detail by way of an Example with reference to the accompanying drawings. In the present Example, a resin pipe member 1 used for supplying gas (exhaust gas, blowby gas, etc.) generated in an engine to an intake manifold 31, as shown in FIG. 4, is exemplified as the "resin pipe member" according to the present invention.

The intake manifold 31 is made of a resin or a metal, and includes a surge tank 32 and a plurality of intake pipes 33 having one end connected to the surge tank 32 and the other end connected to the engine. The surge tank is provided with an attachment portion 35 to which a flange 3, which will be described below, of the resin pipe member 1 is fastened. The attachment portion 35 includes a tubular portion 36 and a flange 37 formed at a shaft end portion of the tubular portion 36 to abut on the flange 3 which will be described below.

### (1) Construction of resin pipe member

As shown in FIG. 1, the resin pipe member 1 according to this Example includes a pipe main body 2 and a flange 3 formed integrally with one shaft end portion 2a of the pipe main body 2. This resin pipe member 1 is provided with a flange 4 formed integrally with the other shaft end portion 2b of the pipe main body 2. Further, the pipe main body 2 is formed in a substantially U-shaped tubular shape. An engagement portion 5 to be engaged with an engine cover (not shown) is formed integrally with an intermediate portion of the pipe main body 2. In addition, the flanges 3, 4 expand and extend to the outer peripheral side of the shaft end portions 2a, 2b, respectively, of the pipe main body 2, and are formed in a substantially rhombic ring shape or a substantially elliptical ring shape (that is, a substantially rhombic shape or substantially elliptical shape having a hole in the center) in plan view.

The resin pipe member 1 is constituted by joining a pair of divided bodies 7a, 7b through welding, adhesion, or the like. The one divided body 7a forms the respective shaft end portions 2a, 2b of the pipe main body 2 and forms a half portion of a site causing the respective shaft end portions 2a, 2b to communicate with each other. Further, the other divided body 7b forms a half portion of the site causing the respective shaft end portions 2a, 2b to communicate with each other.

The flange 3 is fastened to the attachment portion 35 of the intake manifold 31 by a bolt 8 and a nut 9 (exemplified as the "fastening members" according to the present invention) (see FIG. 4). As shown in FIGS. 2 and 3, the flange 3 is arranged so that its fastening surface S intersects an axis C of the shaft end portion 2a of the pipe main body 2 at an acute angle θ (for example, 40 to 80 degrees). The flange 3 is provided with a fastening surface portion 10 partially forming the fastening surface S, a plate-shaped first rib 11 facing a surface opposite to the fastening surface S of the fastening surface portion 10, and a plurality of plate-shaped second ribs 12 (three in the figure) that cause the fastening surface portion 10 and the first rib 11 to communicate with each other, and these components are integrally formed. Further, the flange 3 is provided with right and left fastening portions 13a, 13b to be fastened by the bolt 8 and the nut 9 with the pipe main body 2 sandwiched therebetween.

The fastening surface portion 10 is provided at a portion connecting the left and right fastening portions 13a, 13b in the flange 3. The fastening surface portion 10 is formed in an elongated shape in a direction connecting the right and left fastening portions 13a, 13b. Further, the first rib 11 is provided along a plane F orthogonal to the axis C of the shaft end portion 2a of the pipe main body 2. Further, the second ribs 12 are provided so as to be orthogonal to the first rib 11 and cross the first rib 11. That is, the second ribs 12 extend to the front surface side and the back surface side of the first rib 11. In addition, the plurality of second ribs 12 are provided side by side along the longitudinal direction of the fastening surface portion 10. The flange 4 may have substantially the same configuration as that of the flange 3, or may have a different configuration from that of the flange 3. Further, the plane F may or may not intersect the center of the flange 3.

### (2) Creep test

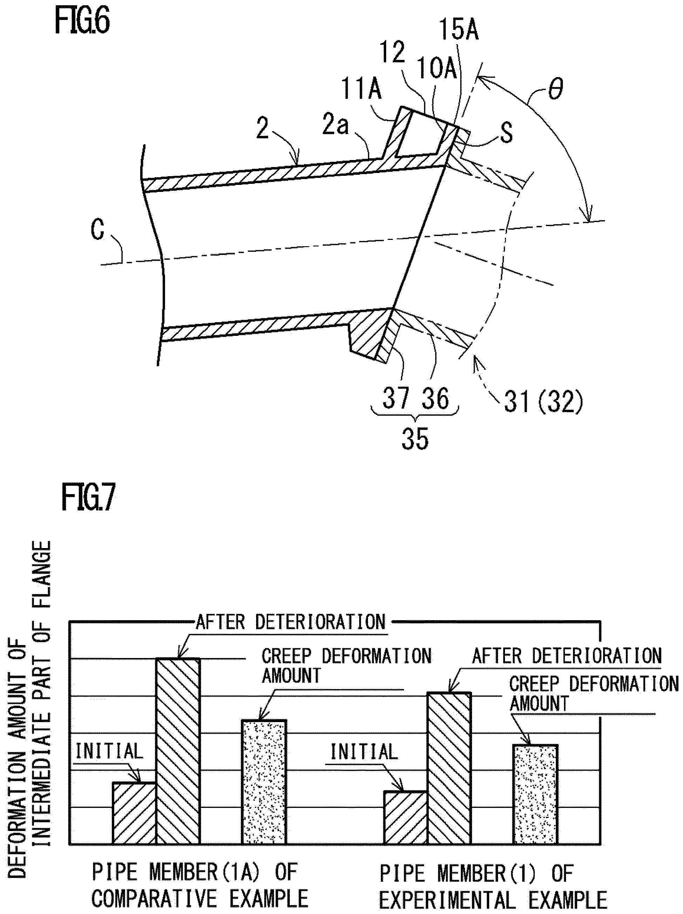

Next, a creep test of resin pipe members according to an Experimental Example and a Comparative Example will be described. In this creep test, the above-described resin pipe member 1 was adopted as the resin pipe member according to the Experimental Example, and a resin pipe member 1A (see FIGS. 5 and 6) was adopted as the resin pipe member according to the Comparative Example.

The resin pipe member 1A has substantially the same configuration as that of the resin pipe member 1 except that it has a flange 3A. The flange 3A is provided with a fastening surface portion 10A partially forming a fastening surface S, a plate-shaped first rib 11A facing a surface opposite to the fastening surface S of the fastening surface portion 10A, and a plurality of plate-shaped second ribs 12A (three in the figure) which cause the first rib 11A and the fastening surface portion 10A to communicate with each other, and these components are integrally formed. The first rib 11A is provided in parallel with the fastening surface portion 10A.

In the creep test, the amounts of deformation of the intermediate portions 15, 15A apart from the left and right fastening portions 13a, 13b in the fastening surface portions 10, 10A of the flanges 3, 3A of the resin pipe members 1, 1A were measured. Specifically, the amounts of initial deformation of the intermediate portions 15, 15A immediately after fastening the resin pipe members 1, 1A to the intake manifold 31 were measured. Further, after the intake manifold 31 to which the resin pipe members 1, 1A had been fastened was left in a predetermined atmosphere (for example, an atmosphere at about 150°C) for a predetermined time (for example, 100 hours), the amounts of deformation after deterioration of the intermediate portions 15, 15A were measured. Then, the values obtained by subtracting the initial deformation amounts from the amounts of deformation after deterioration were taken as the creep deformation amounts.

As a result, as shown in FIG. 7, it was found that, as compared with the initial deformation amount and the amount of deformation after deterioration of the intermediate portion 15A of the resin pipe member 1A according to the Comparative Example, the initial deformation amount and the amount of deformation after deterioration of the intermediate portion 15 of the resin pipe member 1 according to the Experiment Example were small. Also, it was found that the creep deformation amount of the intermediate portion 15 of the resin pipe member 1 according to the Experiment Example was reduced by about 18% as compared with the creep deformation amount of the intermediate portion 15A of the resin pipe member 1A according to the Comparative Example.

### (3) Effects of Example

According to the resin pipe member 1 of this Example, the flange 3 is arranged so that its fastening surface S intersects the axis C of the shaft end portion 2a of the pipe main body 2 at an acute angle. The flange 3 is provided with the fastening surface portion 10 forming the fastening surface S, the first rib 11 facing the surface opposite to the fastening surface S of the fastening surface portion 10, and the plurality of second ribs 12 causing the fastening surface portion 10 and the first rib 11 to communicate with each other, and the first rib 11 is provided along the plane F orthogonal to the axis C of the shaft end portion 2a of the pipe main body 2. As a result, the rigidity of the flange 3 is enhanced by the first rib 11 and the second ribs 12. Therefore, in the configuration in which the fastening surface S of the flange 3 is not orthogonal to the axis C of the shaft end portion 2a of the pipe main body 2, the creep deformation generated at the site 15 apart from the fastening places 13a, 13b of the flange 3 can be reduced. Therefore, stable gas supply to the intake manifold 31 can be maintained for a long time.

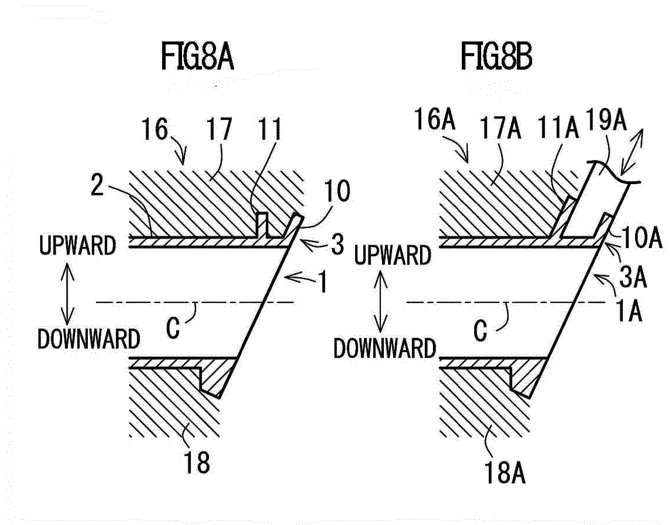

Here, as shown in FIG. 8B, a mold structure 16A for molding the resin pipe member 1A (specifically, the half body 7a) must be provided with a slide mold 19A that slides in an oblique direction for forming the first rib 11A in addition to a pair of molds 17A, 18A that are adjacent to and apart from each other in a vertical direction (that is, a direction orthogonal to the axis C of the shaft end portion 2a of the pipe main body 2). On the other hand, as shown in FIG. 8A, in a mold structure 16 for molding the resin pipe member 1 (specifically, the half body 7a), the first rib 11 is formed by using a mold 17 so that the slide mold 19A is not required. Therefore, according to the resin pipe member 1 of this Example, the slide molds used in the mold structure 16 can be reduced or eliminated as compared with the resin pipe member 1A in which the first rib 11A is arranged in parallel with the fastening surface portion 10A. Therefore, the resin pipe member 1 can be molded using the simple mold structure 16.

Furthermore, in the present Example, the second ribs 12 are provided so as to be orthogonal to the first rib 11 and cross the first rib 11. As a result, the rigidity of the flange 3 is further increased, so that it is possible to further reduce the creep deformation generated at the site 15 away from the fastening places 13a, 13b of the flange 3.

The present invention is not limited to the above-described Example, and can be variously modified within the scope of the present invention depending on the purpose and application. That is, although the flange 3 formed with the single first rib 11 has been exemplified in the above Example, the present invention is not limited thereto. A flange formed with a plurality of first ribs 11 arranged in juxtaposition may be used.

In the above Example, the second ribs 12 extending to cross the first rib 11 has been exemplified, but the present invention is not limited thereto. For example, the second ribs 12 may extend only between the facing surfaces of the first rib 11 and the fastening surface portion 10 without extending to the side opposite to the facing surface of the first rib 11.

In the above Example, the bolt 8 and the nut 9 have been exemplified as the fastening members, but the present invention is not limited thereto. For example, a rivet, a clip, a grommet, or the like may be adopted as the fastening member.

In the above Example, the fastening surface portion 10 forming a part of the fastening surface S has been exemplified, but the present invention is not limited thereto. For example, the fastening surface portion may form the entire surface of the fastening surface S.

Further, in the above Example, the attachment portion 35 provided in the surge tank 32 of the intake manifold 31 has been exemplified, but the present invention is not limited thereto. For example, the attachment portion may be provided in a gas supply passage portion formed along the plurality of intake pipes 33.

Further, in the above Example, the resin pipe member for supplying gas has been exemplified, but the present invention is not limited thereto. For example, the resin pipe member may be used for supplying a liquid or utilized as a structure such as a support rod.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

The present invention is widely used as a technology relating to a resin pipe member in which a flange of a shaft end portion is fastened to a different member.

The present resin pipe member 1 includes a pipe main body 2 and a flange 3, and the flange 3 is arranged so that its fastening surface S intersects an axis C of a shaft end portion of the pipe main body at an acute angle or an obtuse angle. The flange is formed with a fastening surface portion 10 forming the fastening surface, a first rib 11 facing a surface opposite to the fastening surface of the fastening surface portion, and a plurality of second ribs 12 causing the fastening surface portion and the first rib to communicate with each other, and the first rib is provided along a plane F orthogonal to the axis of the shaft end portion of the pipe main body.

## Claims

1. A resin pipe member (1) comprising: a pipe main body (2); and a flange (3) formed integrally with a shaft end portion (2a) of the pipe main body (2) to be fastened to a different member (31) by a fastening member (8,9),
wherein the flange (3) is arranged so that its fastening surface (S) intersects an axis (C) of the shaft end portion (2a) of the pipe main body (2) at an acute angle or an obtuse angle,
wherein the flange (3) is formed with a fastening surface portion (10) forming the fastening surface (S),
**characterized by**
a first rib (11) facing a surface opposite to the fastening surface (S) of the fastening surface portion (10), and a plurality of second ribs (12) causing the fastening surface portion (10) and the first rib (11) to be connected with each other,
wherein the first rib (11) is provided along a plane (F) orthogonal to the axis (C) of the shaft end portion (2a) of the pipe main body (2).

2. The resin pipe member (1) according to claim 1, wherein the second ribs (12) are provided so as to be orthogonal to the first rib (11) and cross the first rib (11).

3. The resin pipe member (1) according to claim 1 or 2, wherein the resin pipe member (1) is fastened to an intake manifold (31) which is the different member in order to supply gas generated in an engine to the intake manifold (31).

4. The resin pipe member (1) according to any one of claims 1 to 3,
wherein the flange (3) is provided with right and left fastening portions (13a,13b) to be fastened to the different member (31) by the fastening member (8,9) with the pipe main body (2) sandwiched therebetween, and
wherein the fastening surface portion (10) is provided at a portion connecting the right and left fastening portions (13a,13b) in the flange (3).

5. The resin pipe member (1) according to any one of claims 1 to 4, wherein the first rib (11) and the second rib (12) are formed in a plate-shape respective.

## Patentansprüche

1. Harzrohrelement (1), mit: einem Rohrhauptkörper (2); und einem Flansch (3), der einstückig mit einem Schaftendabschnitt (2a) des Rohrhauptkörpers (2) ausgebildet ist, um durch ein Befestigungselement (8, 9) an einem anderen Element (31) befestigt zu werden,
wobei der Flansch (3) so angeordnet ist, dass seine Befestigungsoberfläche (S) eine Achse (C) des Schaftendabschnitts (2a) des Rohrhauptkörpers (2) unter einem spitzen Winkel oder einem stumpfen Winkel schneidet,
wobei der Flansch (3) mit einem Befestigungsoberflächenabschnitt (10) ausgebildet ist, der die Befestigungsoberfläche (S) bildet, **gekennzeichnet durch**
eine erste Rippe (11), die einer Fläche zugewandt ist, die der Befestigungsfläche (S) des Befestigungsflächenabschnitts (10) gegenüberliegt, und mehrere zweite Rippen (12), die bewirken, dass der Befestigungsflächenabschnitt (10) und die erste Rippe (11) miteinander verbunden sind,
wobei die erste Rippe (11) entlang einer Ebene (F) vorgesehen ist, die rechtwinkelig zur Achse (C) des Schaftendabschnitts (2a) des Rohrhauptkörpers (2) verläuft.

2. Harzrohrelement (1) nach Anspruch 1, wobei die zweiten Rippen (12) so vorgesehen sind, dass sie rechtwinklig zu der ersten Rippe (11) liegen und die erste Rippe (11) kreuzen.

3. Harzrohrelement (1) nach Anspruch 1 oder 2, wobei das Harzrohrelement (1) an einem Ansaugkrümmer (31) befestigt ist, der das unterschiedliche Element ist, um ein in einer Maschine erzeugtes Gas dem Ansaugkrümmer (31) zuzuführen.

4. Harzrohrelement (1) nach einem der Ansprüche 1 bis 3,
wobei der Flansch (3) mit rechten und linken Befestigungsabschnitten (13a, 13b) bereitgestellt ist, die durch das Befestigungselement (8, 9) an dem unterschiedlichen Element (31) zu befestigen sind, wobei der Rohrhauptkörper (2) sandwichartig dazwischen angeordnet ist, und
wobei der Befestigungsoberflächenabschnitt (10) an einem Abschnitt vorgesehen ist, der den rechten und den linken Befestigungsabschnitt (13a, 13b) in dem Flansch (3) verbindet.

5. Harzrohrelement (1) nach einem der Ansprüche 1 bis 4, wobei die erste Rippe (11) und die zweite Rippe (12) jeweils plattenförmig ausgebildet sind.

## Revendications

1. Elément de tuyau en résine (1) comprenant : un corps principal de tuyau (2) ; et une bride (3) formée de manière solidaire avec une partie d'extrémité d'arbre (2a) du corps principal de tuyau (2) à fixer sur un élément différent (31) par un élément de fixation (8, 9),
dans lequel la bride (3) est agencée de sorte que sa surface de fixation (S) coupe un axe (C) de la partie d'extrémité d'arbre (2a) du corps principal de tuyau (2) à un angle aigu ou un angle obtus,
dans lequel la bride (3) est formée avec une partie de surface de fixation (10) formant la surface de fixation (S),
**caractérisé par** :
une première nervure (11) faisant face à une surface opposée à la surface de fixation (S) de la partie de surface de fixation (10), et une pluralité de secondes nervures (12) amenant la partie de surface de fixation (10) et la première nervure (11) à être raccordées entre elles,
dans lequel la première nervure (11) est prévue le long d'un plan (F) orthogonal à l'axe (C) de la partie d'extrémité d'arbre (2a) du corps principal de tuyau (2).

2. Elément de tuyau en résine (1) selon la revendication 1, dans lequel les secondes nervures (12) sont prévues afin d'être orthogonales à la première nervure (11) et transversales par rapport à la première nervure (11).

3. Elément de tuyau en résine (1) selon la revendication 1 ou 2, dans lequel l'élément de tuyau en résine (1) est fixé sur un collecteur d'admission (31) qui est l'élément différent afin de fournir le gaz généré dans un moteur au collecteur d'admission (31).

4. Elément de tuyau en résine (1) selon l'une quelconque des revendications 1 à 3,
dans lequel la bride (3) est prévue avec des parties de fixation droite et gauche (13a, 13b) à fixer sur l'élément différent (31) par l'élément de fixation (8, 9) avec le corps principal de tuyau (2) pris en sandwich entre elles, et
dans lequel la partie de surface de fixation (10) est prévue au niveau d'une partie raccordant les parties de fixation droite et gauche (13a, 13b) dans la bride (3).

5. Elément de tuyau en résine (1) selon l'une quelconque des revendications 1 à 4, dans lequel la première nervure (11) et la seconde nervure (12) sont formées selon une forme de plaque respective.
